# EUROPEAN PATENT SPECIFICATION

(11) **EP 0 415 869 B1**
(45) Date of publication and mention of the grant of the patent: **24.07.1996**
(21) Application number: 90630137.9
(22) Date of filing: 14.08.1990
(51) Int. Cl.: B29B 11/16, B29C 70/48, B29C 70/40

(54) **Stabilizing inserts for resin transfer molding**
Stabilisierung von Einlagen für das "RTM"-Verfahren
Stabilisation de pièces d'insertion pour le procédé "RTM"

(30) Priority: 28.08.1989 US 399677; 28.08.1989 US 399678
(43) Date of publication of application: 06.03.1991
(73) Proprietor: UNITED TECHNOLOGIES CORPORATION, Hartford, CT 06101 (US)
(72) Inventor: Donovan, Thomas P., Sr., West Haven, Connecticut 06516 (US); Brace, Michael W., San Diego, California 92126 (US)
(74) Representative: Schmitz, Jean-Marie

(56) References cited:
- EP-A- 0 415 870
- FR-A- 1 495 535
- GB-A- 1 324 681
- GB-A- 2 212 436
- GB-A- 2 225 277
- US-A- 4 331 723

## Description

The present invention concerns a preform assembly for use with a resin transfer molding apparatus according to the precharacterizing portion of claim 1, a method for preparing a preform assembly according to the precharacterizing portion of claim 12, and a method of making a composite article according to the precharacterizing portion of claim 17 (GB-A-1 324 681).

The present invention relates to resin transfer molding and, more specifically, to a means of loading preform assemblies into a resin transfer mold apparatus.

Resin transfer molding is a closed mold, low pressure process applicable to the fabrication of complex, high performance composite articles of both large and small size. Several different resin transfer molding processes are well known to those skilled in the art. The process differs from various other molding processes in that a reinforcing material or preform such as glass fibers or other fiber reinforcement, is placed separately into a mold tool cavity. Resin is then injected under pressure into the mold cavity to combine with the preform to form a fiber reinforced plastic composite product.

Typically, a pre-shaped fiber reinforced preform is positioned within a molding tool cavity and the molding tool is closed. The mold is subsequently evacuated by pulling a vacuum through the mold. A feed line connects the closed molding tool cavity with a supply of liquid resin and the resin is pumped or "transferred" into the cavity where it impregnates and envelopes the fiber reinforced preform and subsequently cures. The cured or semi-cured product is then removed from the molding tool cavity.

The primary advantage of resin transfer molding resides in its capacity for high rate production. Although this process is widely known, the use of this molding process has not become widespread because of problems associated with the process. For example, use of the process has been hampered by the difficulties associated with stabilizing and de-bulking the dry composite preform and loading the same into the mold cavity. Maintaining adequate tolerances of the components and sealing the mold apparatus is also problematic.

Specifically with regard to molding aerospace structures, these difficulties often yield disoriented fibers, areas which are resin rich or lean depending upon bulk variations of a preform assembly, or porosity (i.e. trapped air due to an improper vacuum) within the composite which greatly diminishes the specific strength of the component. Due to the high costs of both fabrication and material, rejection of a single part out of a batch can negate the savings initially. As a result, use of the process has typically been limited to rather simple, low-strength components as compared to high strength aerospace components.

The GB-A-1 324 681 discloses a method of making a building or like component of reinforced polyester resin in utilizing a mold comprising at least one slot. In that slot is inserted a preform and a thin insert which is placed in the slot of the mold said insert aiding in the insertion of the preform in the mold.

Thus, there is a continuing need in this field of art for means to obviate the above problems.

Accordingly, it is an object of the present invention to provide a stabilization technique which facilitates the handling and loading of preform assemblies into a resin transfer mold apparatus.

Another objective is to produce an improved component of increased strength and allow for net molding of same.

The preform assembly of the present invention is defined in the characterizing portion of claim 1, the method for preparing the preform assembly is defined in the characterizing portion of claim 12 and the method for making a composite article is defined in the characterizing portion of claim 17.

The present invention utilizes a preform assembly for use in a resin transfer mold apparatus. More specifically, according to a preferred embodiment the present invention comprises a dry fabric preform and a thin precured fiber-reinforced resin impregnated laminate. According to an alternative embodiment, the present invention comprises a dry fabric preform and a thin high density foam insert. The preform is folded about the laminate or the insert to form a preform assembly having a stiffened and stabilized preform edge. The edge aids in the insertion of the preform assembly into a mold cavity or channel of the resin transfer mold apparatus.

A further aspect of the disclosure includes a method for preparing a preform assembly which includes cutting a dry fabric preform to the desired shape and thickness, forming a thin precured fiber-reinforced resin impregnated laminate to typically conform to the desired preform shape, placing the laminate over the preform, folding the preform about a fold line so that the laminate is surrounded by the preform, and firmly fastening the preform to the laminate to form a preform assembly having a stiffened and stabilized preform edge section.

A further aspect of the disclosure according to the second embodiment of the invention includes a method for preparing a preform assembly which includes cutting a dry fabric preform to the desired shape and thickness, forming a thin high density foam insert to typically conform to the desired preform shape, placing the insert over the preform, folding the preform about a fold line so that the insert is surrounded by the preform, and firmly fastening the preform to the insert to form a preform assembly having a stiffened and stabilized preform edge section.

A still further aspect of the disclosure includes a method for making a composite article which includes forming a preform assembly, as disclosed by the present invention, inserting an edge of the preform assembly into a mold cavity of a resin transfer molding apparatus, tapping the preform assembly to fully occupy the mold cavity, closing the molding apparatus, introducing resin into the cavity to form a composite article, and removing the article from the molding apparatus subsequent to curing and cooling the article.

The foregoing and other features and advantages of the present invention will become more apparent from the following description and accompanying drawings.

Fig. 1 depicts an exploded perspective view of a prior art mold body and a prior art preform.

Fig. 2 illustrates a perspective view of the dislodged and disoriented fibers, as well as areas of unreinforced resin, associated with conventional resin transfer mold processes.

Fig. 3 illustrates a perspective view of the laminate used in the present invention.

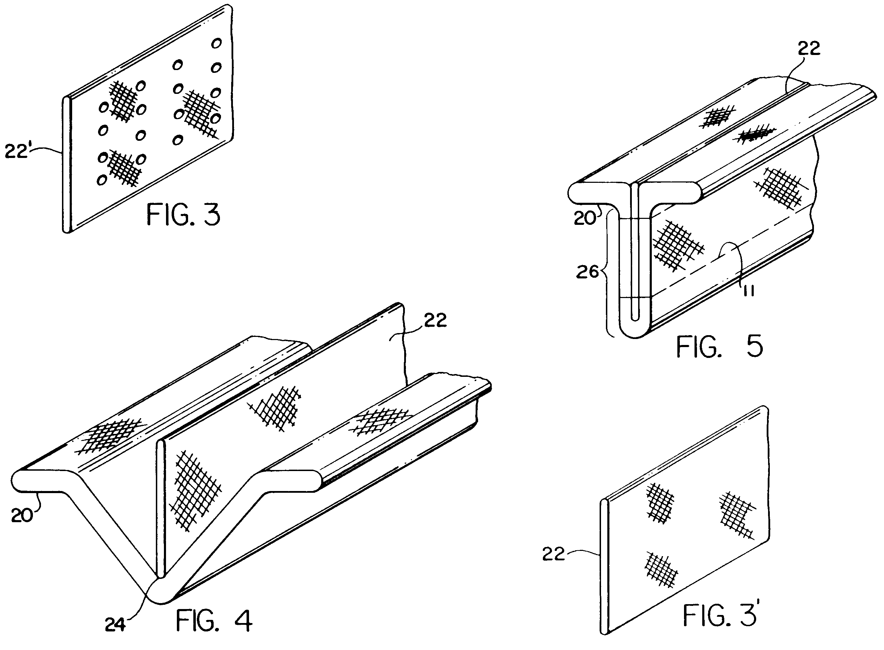

Fig. 3′ illustrates a perspective view of the insert used according to the second embodiment of the present invention.

Fig. 4 illustrates a perspective view of a partly assembled laminate or insert and dry fabric preform, and their relationship thereto, of the present invention.

Fig. 5 illustrates a perspective view of an assembled laminate or insert and dry fabric preform to yield the present invention.

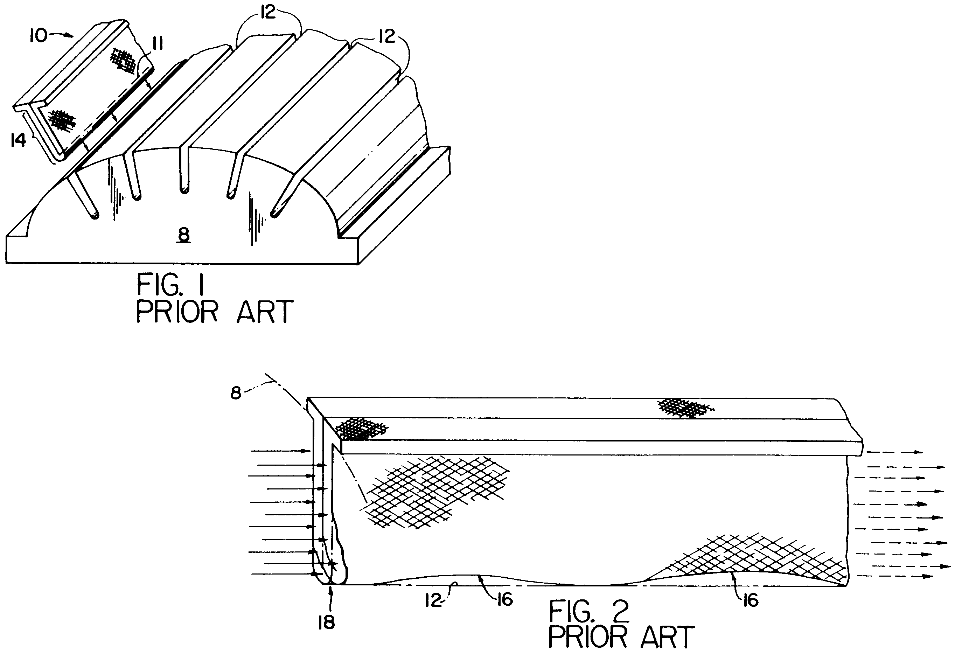

A prior art resin transfer mold and preform are depicted in Figs. 1 and 2. According to Fig. 1, a dry fabric preform 10, typically referred to as a stringer, is loaded into a channel or mold cavity 12 of a mold body 8. Due to the need to maintain high fiber volume, the mold cavity 12 is generally smaller in volume that the bulky stringer 10, despite the stitching 11 which provides some debulking and stabilization to the stringer 10. Hence, it is difficult to ensure that the entire shear web 14 fully occupies the mold cavity 12.

Problems with the prior art are more clearly visible in Fig. 2. In Fig. 2, areas or pockets of unreinforced resin 16 are formed as a result of the unfilled sections of the mold cavity 12 with the shear web 14. Additionally, dislodged and disoriented fibers 18 are often a result of resin injection pressures and resin flow. These fibers 18 severely degrade the strength of the composite component.

A clearer understanding of the present invention may be made by reference to Figs. 3, 3′, 4 and 5. In Figs. 3, 3′ and 4, a high density foam insert or a fiber reinforced resin impregnated laminate 22 and 22′ are depicted. As illustrated, the laminate may be homogeneous 22 or perforated 22′ (to aid in the capillary or wicking action of the resin).

A dry fabric preform 20 is illustrated in Fig. 4. The preform 20 comprises a plurality of fabric patterns cut to the desired two dimensional shape and stacked to yield the desired preform thickness.

The laminate 22, 22′ or the insert 22 are placed over the preform 20 adjacent to a fold line 24. The preform 20 is then folded about the fold line 24 so that the laminate 22, 22′ or insert 22 is surrounded by the preform 20. The laminate 22, 22′ or the insert 22 are firmly fastened to the preform 20, by a means such as stitching 11, to form a preform assembly having a stiffened and stabilized preform edge section 26.

The edge section 26 is inserted into the mold channel or cavity 12. The section occupies the entire depth of the cavity and may be hand or mallet tapped into place.

More specifically, the laminate is a thin fiber-reinforced resin impregnated composite. It is precured to impart rigidity to it, as well as serving as a stabilizer to the preform. This rigidity also facilitates the shaping of the laminate to typically conform to the shape of the preform and ultimately, the composite article. The fibers and resins used in the laminate are those conventional to the art such as glass, polyaramid, graphite, epoxies, polyester, vinyl esters, phenolics and urethanes.

More specifically, in the second embodiment the insert is made from a thin, high density, closed cell structural foam. High density means a density greater than about 3.9 pounds per cubic foot (lb/cu.ft.). This is important to ensure process compatibility, e.g. temperature, pressure, and resin resistance. The foams used in the insert are those conventional to the art including polyimides (annealed or heat treated), polyurethanes, polyvinyl chloride (PVC) and cellular cellulose acetate (CCA). Exemplary foams are ROHACELL (TM) polymethacrylimide foam available from Rohm Corporation of Germany and distributed in the United States by Cyro Corporation (Orange, Connecticut), DIVINYCELL (TM) foam available from Diab-Barracude AB of Laholm, Sweden, and STRUX CCA (TM) foam available from Deltex Associates (Bridgewater, New Jersey).

Preferably, the laminate or insert are compatible to the resin to be injected into the mold. BY compatible is meant that the laminate or the insert maintain their mechanical and thermal properties and are able to withstand the pressures and temperatures exerted during the molding process. Preferably, the laminate or insert have a thickness that will provide suitable rigidity to stabilize the preform and ensure an improvement in mechanical properties, but is still flexible enough to maintain any contours in the laminate or the foam constituting the insert. Depending on the thickness of the preform and the width of the mold cavity, the laminate will typically have a thickness between about 0.005 inches and about 0.01 inches. According to the second embodiment the insert will typically have a thickness less than about 0.5 inches.

In addition, the laminate or insert preferably has a height dimension such that it will be accessible from the top of the mold cavity when placed in the mold cavity. This allows the laminate or insert to be firmly placed within the cavity as further described herein.

The dry fabric preform comprises a plurality of fabric patterns cut to the desired two-dimensional shape. Preferably, the preform is untreated to ensure optimal strength. These patterns are then stacked upon each other to yield a desired preform thickness. The fabric preform used in the present invention is also made from materials conventional to those in the art, such as E glass fibers (for low modulus applications), S glass fibers (for high modulus applications), graphite fibers, aramid fibers including KEVLAR (TM) polyamide fiber (E.I. Dupont de Nemours, Wilmington, Del.), and the like. For use in the preforms, such fibrous reinforced material can used in any of various configuration including, for example, random chopped fiber, continuous random fiber, and oriented continuous fiber, for example, nonwoven, woven, knitted, braided, etc.

The laminate or insert is placed over the preform adjacent to a fold line, such fold line being the symmetrical centre of the preform. The preform is folded about and surrounds the laminate or insert. The preform is firmly fastened to the laminate to form a preform assembly having a stiffened and stabilized preform edge section. The preform assembly has a combined thickness (laminate or insert and preform itself) or cross sectional area that it slightly larger than the channel or cavity width of the particular mold apparatus. By this is meant that the preform assembly will fit snugly into the channel or cavity but not so tight that the dry fabric preform will bunch or gather.

The preform assembly for use in a resin transfer mold apparatus is prepared by cutting a dry fabric preform to the desired shape, the preform comprising a plurality of two-dimensional fabric patterns stacked to the desired thickness. A thin precured fiber-reinforced resin impregnated laminate or a high density foam insert are formed, by methods known to one skilled in the art, to typically conform to the desired preform shape. The laminate or insert is then placed over the preform adjacent to a fold line, the fold line being the symmetrical centerline of the preform. The preform is folded about the fold line, surrounding the laminate or insert. Subsequently, the preform is firmly fastened to the laminate or insert to form a preform assembly having a stiffened and stabilized preform edge section. By firmly fastened is meant that the laminate or insert is held in a fixed relation to the preform. This fastening is typically achieved by methods known to one skilled in the art. For example, the preform assembly may be stitched together with a thread of polyester, KEVLAR (TM), etc., or may be adhesively attached by using a hot iron.

The stabilized edge section is inserted into the mold channel or cavity by hand. The top of the preform assembly is hand or lightly mallet tapped into place to ensure that the cavity or channel will be fully occupied by the preform assembly. This may also be accomplished by using the cover of the resin transfer mold or any other suitable means. By fully occupied is meant that the stabilized section edge occupies the entire depth of the mold cavity and is flush against each side of the cavity, i.e. the sides and bottom. Suitable precautions are preferably taken to avoid any possible shearing to the fabric.

The dry fabric preform may also be open-faced at its fold line. This embodiment is foreseeable/desirable when the closed wrapping of the preform is not needed for extra structural performance. Necessary steps should be taken to ensure that the now opened laminate is locked, i.e., firmly held in place, with the preform at the fold line. A lock stitch or the like is suitable.

While a T-shaped preform assembly is depicted in Fig. 5, it will be apparent that the teaching of the present invention is applicable to a variety of preform shapes, such as flat surfaces, circular surfaces, etc.

When the mold is fully assembled, the resin is transferred under pressure into the evacuated article chamber impregnating the dry fabric preform and laminate or foam assembly. The resin is forced into the mold under conventional pressures. These typically range from about 85 psi to about 300 psi. Once the mold is full, the resin impregnated preform assembly is exposed to conventional pressures and temperatures appropriate for the particular resin and fiber used. Typically, these pressures and temperatures are about 5 psi to about 300 psi and about ambient to about 500°F. Once fully cured, the mold can be disassembled and the fully cured article may be removed.

An alternate embodiment of the present invention relates to the use of a thin frozen uncured prepreg insert as a substitute for the thin high density foam insert. In a similar manner, the rigidity of the frozen uncured prepreg insert aids the insertion of the preform into the resin transfer mold apparatus. The frozen insert should also be an appropriate thickness to yield the previously mentioned characteristics.

The use of the preform assembly not only provides a stabilizing means to the component article, but also aids in the insertion of such assembly into a mold cavity. This preform assembly provides a substantial improvement to other preforms available in the art because only a minimal, if not negligible, amount of dislocation and distortion of the preform fibers associated with the resin injection process occurs. As a result, net molding of composite articles becomes more feasible as the trimming process is substantially eliminated. Overall, a more efficient and desirable process for producing resin transfer mold high strength components is created.

Although the invention has been shown and described with respect to a preferred embodiment, it will be understood by those skilled in the art that various changes in form and detail thereof may be made without departing from the scope of the claimed invention.

## Claims

1. A preform assembly for use with a resin transfer molding apparatus which comprises:
(a) a dry fabric preform (20); and
(b) a thin insert (22,22')
(c) said preform (20) being folded about said insert (22,22') to form an edge (26), which aids in the insertion of the preform assembly into a cavity of a resin transfer mold apparatus, characterized in that said thin insert (22,22') is selected from a fiber reinforced resin impregnated laminate and a high density foam insert; said preform (20) being firmly fastened to said insert (22, 22') to form said edge which is stiffened and stabilized, said fastening being carried out prior to the introduction of a resinous binder in said cavity of the resin transfer mold apparatus and curing said resinous binder.

2. A preform assembly according to claim 1 characterized in that said thin insert (22') is a fiber-reinforced resin impregnated laminate, which is precured for imparting rigidity to said laminate.

3. A preform assembly according to claim 1 characterized in that said thin insert (22) is a high-density foam insert.

4. The preform assembly according to claim 1 characterized in that said dry fabric preform (20) comprises a plurality of fabric patterns having a desired two-dimensional shape and thickness.

5. The preform assembly according to claim 1 characterized in that said preform (20) comprises material selected from the group consisting of E glass fibers, S glass fibers, graphite fibers, and aramid fibers.

6. The preform assembly according to claim 2 characterized in that said laminate (22') is perforated.

7. The preform assembly according to claim 2 characterized in that said laminate (22') is homogeneous.

8. The preform assembly according to claim 3 characterized in that said insert (22) is a thin, high density, closed cell structural foam.

9. The preform assembly according to claim 8 characterized in that said insert (22) comprises material selected from the group consisting of polyimides, polyurethanes, polyvinyl chloride and cellular cellulose acetate.

10. The preform assembly according to claim 1 characterized in that the combined thickness of said preform (20) and said insert (22,22') to form said assembly is such that said assembly fits snugly into said mold cavity.

11. The preform assembly according to claim 3 characterized in that said insert (22) has a density greater than 62.5 kg/m³ (3.9 lb/cu.ft).

12. A method for preparing a preform assembly for use with a resin transfer mold apparatus which comprises the steps of:
(a) cutting a dry fabric preform (20) to a desired shape, said preform (20) comprising a plurality of fabric patterns stacked to the desired preform thickness;
(b) forming a thin insert (22,22') to match said desired preform shape;
(c) placing said insert (22,22') over said preform (20) and adjacent to a fold line, said fold line being the symmetrical centerline of said preform (20);
(d) folding said preform (20) about said fold line so that said insert (22,22') is surrounded by said preform (20); characterized by
(e) firmly fastening said preform (20) to said insert (22,22') to form a preform assembly having a stiffened and stabilized preform edge section (26), wherein said edge section (26) aids in the insertion of said preform assembly into a mold cavity of said mold transfer apparatus, said preform (20) being fastened to the insert (22,22') prior to the introduction of resinous binder in the mold cavity and the curing of said resinous binder.

13. The method according to claim 12 characterized in that said fastening (11) is stitching.

14. The method according to claim 12 characterized in that said fastening (11) is made by an adhesive.

15. The method of claim 12 characterized in that the insert (22') is a fiber reinforced resin impregnated laminate, which is precured for imparting rigidity to said laminate.

16. The method of claim 12 characterized in that the insert (22) is a high density foam insert.

17. A method for making a composite article which comprises the steps of:
(a) forming a preform assembly, said assembly comprising a dry fabric preform (20) and a thin insert (22,22'), said preform folded about said insert (22,22') to form an edge (26)
(b) inserting said preform edge into a mold cavity of a resin transfer molding apparatus
characterized in that in step (a) said preform (20) is firmly fastened to said insert (22,22') to form said edge (26) which is stiffened and stabilized said fastening being carried out prior to the introduction of the resinous binder in the mold cavity and curing said resinous binder;
further characterized by
(c) tapping said preform assembly to fully occupy said mold cavity;
(d) closing said molding apparatus on said preform assembly;
(e) introducing resin into said cavity of said molding apparatus to form a composite article; and
(f) removing said article from said molding apparatus subsequent to curing and cooling said article, characterized in that said article is a net molded part having a minimal amount of dislocation and distortion of said preform fibers.

18. The method according to claim 17 characterized in that said insertion is by hand.

## Patentansprüche

1. Vorformlingsbaugruppe zur Verwendung bei einer Harzspritzpreßvorrichtung, bestehend aus :
a) einem trockenen Gewebevorformling (20); und
b) einer dünnen Einlage (22 ,22')
c) wobei der Vorformling (20) um die Einlage (22,22') gefaltet wird, um eine Kante (26) zu bilden, die das Einführen der Vorformlingsbaugruppe in ein Nest einer Harzspritzpreßvorrichtung erleichtert, dadurch gekennzeichnet, daß die dünne Einlage (22, 22') aus einem faserverstärkten, harzgetränkten Laminat und einer Einlage aus hochverdichtetem Schaumstoff ausgewählt ist; wobei der Vorformling (20) sicher an der Einlage (22, 22') befestigt ist, um die Kante zu bilden, welche versteift und stabilisiert ist, wobei das Befestigen vor der Einführung eines Harzbindemittels in das Nest der Harzspritzpressvorrichtung und dem Aushärten des Harzbindemittels durchgeführt wird.

2. Vorformlingsbaugruppe nach Anspruch 1, dadurch gekennzeichnet, daß die schmale Einlage (22') ein faserverstärktes harzgetränktes Laminat ist, das vorgehärtet ist, um das Laminat zu versteifen.

3. Vorformlingsbaugruppe nach Anspruch 1, dadurch gekennzeichnet, daß die dünne Einlagen (22) eine hochverdichtete Schaumstoffeinlage ist.

4. Vorformlingsbaugruppe nach Anspruch 1, dadurch gekennzeichnet, daß der trockene Gewebevorformling (20) eine Vielzahl von Gewebemustern mit einer gewünschten zweidimensionalen Form und Dicke umfaßt.

5. Vorformlingsbaugruppe nach Anspruch 1, dadurch gekennzeichnet, daß der trockene Gewebevorformling (20) Werkstoffe umfaßt, die aus der Gruppe bestehend aus E Glasfasern, S Glasfasern, Graphitfasern, und Aramidfasern ausgewählt sind.

6. Vorformlingsbaugruppe nach Anspruch 2, dadurch gekennzeichnet, daß das Laminat (22') durchlöchert ist.

7. Vorformlingsbaugruppe nach Anspruch 2, dadurch gekennzeichnet, daß das Laminat (22') homogen ist.

8. Vorformlingsbaugruppe nach Anspruch 3, dadurch gekennzeichnet, daß die Einlage (22) ein dünner, hochverdichteter Strukturschaum mit geschlossenen Zellen ist.

9. Vorformlingsbaugruppe nach Anspruch 8, dadurch gekennzeichnet, daß die Einlage (22) einen Werkstoff umfaßt, der aus der Gruppe bestehend aus Polyimiden, Polyurethanen, Polyvinylchlorid und zellenförmigem Zelluloseacetat ausgewählt ist.

10. Vorformlingsbaugruppe nach Anspruch 1, dadurch gekennzeichnet, daß die vereinte Schichtdicke von Vorformling (20) und Einlage (22, 22') zur Herstellung der Baugruppe derartig gebildet ist, daß die Baugruppe gut in das Formnest hineinpaßt.

11. Vorformlingsbaugruppe nach Anspruch 3, dadurch gekennzeichnet, daß die Einlage (22) eine Dichte größer als 62.5 kg/m³ (3.9 lb./cu.ft) aufweist.

12. Verfahren zur Herstellung einer Vorformlingsbaugruppe zur Verwendung mit einer Harzspritzpreßvorrichtung, welches folgende Schritte beinhaltet:
a) Zuschneiden eines trockenen Gewebevorformlings (20) auf eine gewünschte Form, wobei der Vorformling (20) eine Vielzahl von Gewebemustern umfaßt, die bis zu einer gewünschten Vorformlingsdicke aufgestapelt werden;
b) Herstellen einer dünnen Einlage (22, 22'), die auf die gewünschte Form des Vorformlings abgestimmt ist;
c) Anbringen der Einlage (22, 22') auf dem Vorformling (20) und angrenzend an eine Faltlinie, wobei die Faltlinie die symmetrische Mittellinie des Vorformlings (20) bildet;
d) Falten des Vorformlings (20) um diese Faltlinie, so daß die Einlage (22, 22') von dem Vorformling (20) umgeben wird; gekennzeichnet durch
e) sicheres Befestigen des Vorformlings (20) an der Einlage (22, 22'), um eine Vorformlingsbaugruppe mit einem steifen und verstärkten Kantenabschnitt (26) zu bilden, wobei dieser Kantenabschnitt (26) die Einführung der Vorformlingsbaugruppe in das Formnest der Spritzpreßvorrichtung erleichtert, und der Vorformling (20) an der Einlage (22,22') befestigt wird, bevor Harzbindemittel in das Formnest eingeführt und ausgehärtet wird.

13. Verfahren nach Anspruch 12, dadurch gekennzeichnet, daß das Befestigen (11) durch Nähen erzielt wird.

14. Verfahren nach Anspruch 12, dadurch gekennzeichnet, daß das Befestigen (11) mittels eines Klebemittels bewirkt wird.

15. Verfahren nach Anspruch 12, dadurch gekennzeichnet, daß die Einlage (22') ein faserverstärktes, harzgetränktes Laminat ist, das vorgehärtet wird, um das Laminat zu versteifen.

16. Verfahren nach Anspruch 12, dadurch gekennzeichnet, daß die Einlage (22) eine hochverdichtete Schaumstoffeinlage ist.

17. Verfahren zur Herstellung eines Verbundgegenstands, welches folgende Schritte beinhaltet:
a) Bilden einer Vorformlingsbaugruppe, wobei die Baugruppe einen trockenen Gewebevorformling (20) und eine dünne Einlage (22, 22') umfaßt, wobei der Vorformling um die Einlage (22, 22') gefaltet wird, um eine Kante (26) zu bilden;
b) Einführen dieser Vorformlingskante in das Formnest einer Harzspritzpreßvorrichtung dadurch gekennzeichnet, daß im Schritt (a) der Vorformling (20) sicher an der Einlage (22, 22') befestigt wird, um die Kante (26) zu bilden, die versteift und verstärkt wird, wobei das Befestigen vor der Eingabe des Harzbindemittels in das Formnest und dem Aushärten des Harzbindemittels durchgeführt wird; weiter gekennzeichnet durch
c) Anklopfen der Vorformlingsbaugruppe, so daß das Formnest vollständig gefüllt wird;
d) Schließen der Formvorrichtung auf der Vorformlingsbaugruppe;
e) Einführen von Harz in das Nest der Formvorrichtung, um einen Verbundgegenstand zu bilden; und
f) Entfernen des Verbundgegenstands aus der Formvorrichtung nach dem Aushärten und Kühlen des Gegenstands, dadurch gekennzeichnet, daß der Gegenstand ein genaues Formteil ist mit einer minimalen Betrag an Verschiebung und Deformation der Vorformlingsfasern.

18. Verfahren nach Anspruch 17, dadurch gekennzeichnet, daß die Eingabe mit der Hand durchgeführt wird.

## Revendications

1. Un assemblage de préforme à utiliser avec un appareil de moulage par transfert de résine qui comprend:
(a) une préforme (20) en tissu sec; et
(b) une pièce d'insertion mince (22,22')
(c) cette préforme (20) étant pliée autour de cette pièce d'insertion (22,22') pour former un bord (26) qui aide à l'insertion de l'assemblage de préforme dans une cavité d'un appareil de moulage par transfert de résine, caractérisé en ce que cette pièce d'insertion mince (22,22') est choisie entre un feuilleté imprimé de résine renforcée de fibres et une pièce d'insertion en mousse de haute densité; cette préforme (20) étant fermement fixée à cette pièce d'insertion (22,22') pour former ce bord qui est raidi et stabilisé, cette fixation étant mise en oeuvre avant l'introduction d'un liant de résine dans cette cavité d'un appareil de moulage par transfert de résine et durcir ce liant de résine.

2. Un assemblage de préforme selon la revendication 1, caractérisé en ce que cette pièce d'insertion (22') mince est un feuilleté imprégné de résine renforcée de fibres qui est prédurci pour communiquer une rigidité à ce feuilleté.

3. Un assemblage de préforme selon la revendication 1, caractérisé en ce que cette pièce d'insertion (22) est une pièce d'insertion en mousse de haute densité.

4. L'assemblage de préforme selon la revendication 1, caractérisé en ce que cette préforme (20) en tissu sec comprend une pluralité de panneaux de tissu ayant la forme bi-dimensionnelle et épaisseur souhaitées.

5. L'assemblage de préforme selon la revendication 1, caractérisé en ce que cette préforme (20) comprend une matière choisie dans le groupe comprenant les fibres de verre E, les fibres de verre S, les fibres de graphite, et les fibres d'aramide.

6. L'assemblage de préforme selon la revendication 2, caractérisé en ce que ce feuilleté (22') est perforé.

7. L'assemblage de préforme selon la revendication 2, caractérisé en ce que ce feuilleté (22') est homogène.

8. L'assemblage de préforme selon la revendication 3, caractérisé en ce que cette pièce d'insertion (22) est une mousse en structure cellulaire fermée de haute densité, mince.

9. L'assemblage de préforme selon la revendication 8, caractérisé en ce que cette pièce d'insertion (22) comprend une matière choisie dans le groupe comprenant les polyimides, polyuréthanes, chlorure de polyvinyle et acétate de cellulose cellulaire.

10. L'assemblage de préforme selon la revendication 1, caractérisé en ce que l'épaisseur combinée de cette préforme (20) et de cette pièce d'insertion (22,22') pour former cet assemblage est telle que cet assemblage s'ajuste aisément dans cette cavité de moule.

11. L'assemblage de préforme selon la revendication 3, caractérisé en ce que cette pièce d'insertion (22) a une densité supérieure à 62,5 kg/m³ (3.9 lb/cu.ft).

12. Un procédé de préparation d'un assemblage de préforme à utiliser dans un appareil de moulage par transfert de résine qui comprend les étapes de:
(a) découper une préforme (20) en tissu sec à la forme souhaitée, cette préforme (20) comprenant une pluralité de panneaux de tissus empilés jusqu'à l'épaisseur souhaitée de la préforme;
(b) former une pièce d'insertion mince (22,22') pour s'ajuster à cette forme de préforme souhaitée;
(c) disposer cette pièce d'insertion (22,22') au-dessus de cette préforme (20) et adjacent à une ligne de pliage, cette ligne de pliage étant le centre symétrique de la préforme (20);
(d) plier cette préforme (20) autour de cette ligne de pliage de sorte que cette pièce d'insertion (22,22') est entourée par cette préforme (20), caractérisé en ce que
(e) on maintient fermement cette préforme (20) par rapport à cette pièce d'insertion (22,22') pour former un assemblage de préforme ayant une section de bord de préforme (26) raidie et stabilisée, où cette section de bord (26) aide à l'insertion de cet assemblage de préforme dans une cavité de moule de cet appareil de transfert de moule, cette préforme (20) étant fixée à la pièce d'insertion (22,22') avant l'introduction du liant résineux dans la cavité du moule et le durcissement de ce liant résineux.

13. Procédé selon la revendication 12, caractérisé en ce que cette fixation (11) est une couture.

14. Procédé selon la revendication 12, caractérisé en ce que cette fixation (11) est réalisée au moyen d'un adhésif.

15. Procédé selon la revendication 12, caractérisé en ce que la pièce d'insertion (22') est un feuilleté imprégné de résine renforcée de fibres qui est prédurcie pour communiquer une rigidité à ce feuilleté.

16. Procédé selon la revendication 12, caractérisé en ce que la pièce d'insertion (22) est une pièce d'insertion en mousse de haute densité.

17. Un procédé pour fabriquer un article composite qui comprend les étapes de:
(a) former un assemblage de préforme, cet assemblage comprenant une préforme (20) en tissu sec et une pièce d'insertion mince (22,22'), cette préforme étant pliée autour de cette pièce d'insertion (22,22') pour former un bord (26)
(b) insérer ce bord de préforme dans une cavité de moule d'un appareil de moulage par transfert de résine
caractérisé en ce que au cours de l'étape (a) cette préforme (20) est fixée fermement à cette pièce d'insertion (22,22') pour former ce bord (26) qui est raidi et stabilisé, cette fixation étant mise en oeuvre avant l'introduction du liant résineux dans la cavité du moule et le durcissement de ce liant résineux,
caractérisé en outre par les étapes de:
(c) appliquer de petits coups sur cet assemblage de préforme pour occuper entièrement la cavité du moule,
(d) fermer cet appareil de moulage sur cet assemblage de préforme,
(e) introduire la résine dans cette cavité de cet appareil de moulage pour former un article composite et
(f) enlever cet article de cet appareil de moulage après le durcissement et le refroidissement de cet article, caractérisé en ce que cet article est un article moulé net ayant une quantité minime de dislocations et de distorsions de ces fibres de la préforme.

18. Procédé selon la revendication 17, caractérisé en ce que cette insertion se fait à la main.
